(19) Europäisches Patentamt / European Patent Office / Office européen des brevets

(11) **EP 1 223 412 B1**

(12) **EUROPÄISCHE PATENTSCHRIFT**

(45) Veröffentlichungstag und Bekanntmachung des Hinweises auf die Patenterteilung:
**16.11.2011 Patentblatt 2011/46**

(51) Int Cl.:
***G01F 1/84*** (2006.01)

(21) Anmeldenummer: **01100729.1**

(22) Anmeldetag: **12.01.2001**

(54) **Coriolis-Massendurchflussmesser mit einem gekrümmten Rohr und mit symmetrischem Schwingungserzeuger**

Coriolis mass flow meter with one curved pipe and with symmetric excitation driver

Débitmètre massique de Coriolis monotubulaire courbé avec dispositif d'excitation symétrique

(84) Benannte Vertragsstaaten:
**AT BE CH CY DE DK ES FI FR GB GR IE IT LI LU MC NL PT SE TR**

(43) Veröffentlichungstag der Anmeldung:
**17.07.2002 Patentblatt 2002/29**

(73) Patentinhaber: **Endress + Hauser Flowtec AG
4153 Reinach BL 1 (CH)**

(72) Erfinder:
• **Drahm, Wolfgang, Dr.
85435 Erding (DE)**

• **Rieder, Alfred, Dr.
84034 Landshut (DE)**

(74) Vertreter: **Andres, Angelika Maria et al
Endress+Hauser (Deutschland) AG+Co. KG
PatServe
Colmarer Strasse 6
79576 Weil am Rhein (DE)**

(56) Entgegenhaltungen:
| | |
|---|---|
| WO-A1-99/28708 | DE-A- 4 327 052 |
| US-A- 4 831 885 | US-A- 5 060 523 |
| US-A- 5 131 280 | US-A- 5 349 872 |

**Beschreibung**

Die Erfindung betrifft einen elektromechanischen Wandler vom Coriolis-Typ, der insb. für eine Verwendung in einem Coriolis-Massedurchflußmesser geeignet ist.

Zur Ermittlung eines Massedurchflusses eines in einer Rohrleitung strömenden Mediums, insb. einem Fluid, werden oftmals solche Meßgeräte verwendet, die mittels eines elektromechanischen Wandlers vom Coriolis-Typ, angtrieben von einer daran angeschlossener Steuer- und Auswerteelektronik, im Fluid Corioliskräfte bewirken und von diesen abgeleitet ein den Massedurchfluß repräsentierendes Meßsignal erzeugen.

Coriolis-Massedurchflußmesser oder auch Coriolis-Masse/Dichtemesser sind seit langem bekannt und im industriellen Einsatz. So ist z.B. in der US-RE 31 450 ein Coriolis-Massedurchflußmesser mit einem elektromechanischen Wandler vom Coriolis-Typ beschrieben, der auf einen Massedurchfluß eines in einer Rohrleitung strömenden Fluids reagiert und der umfaßt:

- ein einziges, in einer Rohrebene und zu einer darin liegenden Symmetrieachse symmetrisch gekrümmtes Meßrohr zum Führen des Fluids,
- einen starren Trägerkörper zum Haltern des Meßrohrs,
- - wobei das Meßrohr mittels einer einlaßseitigen Einspannung und mittels einer auslaßseitigen Einspannung am Trägerkörper fixiert ist, sowie
- eine Erregeranordnung, die das Meßrohr im Betrieb zu Auslegerschwingungen einer ersten Eigenform anregt, bei denen das Meßrohr aus der Rohrebene herausführende Verdrehungen um eine Rohrachse erfährt, die die beiden Einspannungen imaginär verbindet und die senkrecht zur Symmetrieachse verläuft.

Derartige, z.B. U-förmig, in einer Rohrebene gebogene Meßrohre bewirken bekanntlich, zu Auslegerschwingungen angeregt, im hindurchströmenden Fluid Corioliskräfte. Diese wiederum führen dazu, daß den Auslegerschwingungen Drehschwingungen um die Symmetrieachse gemäß einer zweiten Eigenform des Meßrohrs überlagert werden und dementsprechend die mittels der Sensoranordnung einlaßseitig und auslaßseitig erfaßten Schwingungen eine auch vom Massedurchfluß abhängige, meßbare Phasendifferenz aufweisen.

Zum Erfassen dieser Phasendifferenz weist das vorbeschriebene Massedurchflußmeßgerät ferner eine elektrodynamische Sensoranordnung auf, die dazu dient, einlaßseitige und auslaßseitige Schwingungen des Meßrohrs punktuell zu erfassen und vom Massedurchfluß des Fluids beeinflußte elektrische Sensorsignale zu erzeugen.

Üblicherweise werden die Meßrohre derartiger Meßgeräte im Betrieb auf einer momentanen Resonanzfrequenz der ersten Eigenform, insb. bei konstantgeregelter Schwingungsamplitude, angeregt. Da diese Resonanzfrequenz insb. auch von der momentanen Dichte des Fluids abhängig ist, kann mittels marktüblicher Coriolis-Massedurchflußmesser neben dem Massedurchfluß auch die Dichte des Fluids gemessen werden.

Aufgrund der gekrümmten Rohrform können die Meßrohre derartiger Coriolis-Massedurchflußmesser relativ lang ausgeführt und somit eine hohe Empfindlichkeit des Wandlers auf den zu messenden Massedurchfluß bei einer relativ kurzen Einbaulänge und bei relativ niedriger Erregerenergie erzielt werden. Dies ermöglicht es auch, das Meßrohr aus Materialien mit einem hohen Elastizitätsmodul, insb. Edelstahl, herzustellen. Im Vergleich dazu muß z.B. bei solchen Meßgeräten mit geradem Meßrohr, letzteres zur Erzielung einer ausreichenden Empfindlichkeit üblicherweise aus einem Material gefertigt sein, das ein im Vergleich zu Edelstahl niedrigeren Elastizitätsmodul aufweist. Daher werden für diesen Fall bevorzugt Meßrohre aus Titan oder Zirkonium verwendet, die jedoch aufgrund des höheren Materiealpreises und des üblicherweise auch höheren Bearbeitungsaufwands weitaus teurer als die aus Edelstahl gefertigten sind.

Ein weiterer Vorteil eines gekrümmten Meßrohrs ist darin zu sehen, daß auch thermisch bedingte Ausdehnungen, insb. auch bei der Verwendung von Meßrohren mit einem hohen Ausdehnungskoeffizienten, praktisch keine oder nur sehr gerinfügige mechanische Spannungen in der angeschlossenen Rohrleitung hervorrufen. Nachteilig bei einer derartigen Ausführung des Coriolis-Massedurchflußaufnehmers ist bekanntermaßen, daß im Meßbetrieb via Meßrohr, insb. aufgrund von dessen lateralen Auslenkungen, solche Trägheitskräfte zur Wirkung gelangen, die Torsionsschwingungen und/oder Biegeschwingungen in der angeschlossene Rohrleitung hervorrufen können.

Zur Reduzierung solcher, vom Meßgerät ausgehender Störeinflüsse werden marktübliche Coriolis-Massedurchflußmesser oftmals mit zwei identisch gebogenen und parallel zueinander angeordneten Meßrohren angeboten.

So ist z.B. in der US-A 44 91 025, der US-A 47 68 385 oder der US-A 53 59 881 jeweils ein elektromechanischer Wandler vom Coriolis-Typ beschrieben, der auf einen Massedurchfluß eines in einer Rohrleitung strömenden Fluids reagiert und der umfaßt:

- zwei identische Meßrohre zum Führen des Fluids, die jeweils in einer zugehörigen Rohrebene und zu einer jeweils darin liegenden, zugehörigen Symmetrieachse symmetrisch gekrümmt sind,
- ein starrer Trägerkörper zum Haltern der Meßrohre,
- wobei die Meßrohre jeweils mittels einer zugehörigen einlaßseitigen Einspannung und mittels einer zugehörigen auslaßseitigen Einspannung am Trägerkörper fixiert sind, sowie

- eine Erregeranordnung, die die Meßrohre im Betrieb jeweils zu Auslegerschwingungen einer ersten Eigenform anregt, bei denen die Meßrohre aus ihrer jeweiligen Rohrebene herausführende Verdrehungen um eine Rohrachse erfahren, die die zugehörige einlaßseitige und außlaßseitige Einspannung imaginär verbindet und die senkrecht zur jeweiligen Symmetrieachse verläuft.

Die beiden, üblicherweise mittels eines einlaßseitigen und eines auslaßseitigen Verteilerstücks auch parallel geschalteten, Meßrohre schwingen im Betrieb nach der Art zweier Stimmgabelzinken mit einer Phasendifferenz von 180°, also zueinander gegenphasig, wodurch sich die seitlich wirkenden Trägheitskräfte der beiden Meßrohre gegenseitig aufheben und somit neutralisiert werden.

Als nachteilig bei derartigen parallel durchströmten Doppelrohranordnungen hat sich jedoch vor allem die konstruktionsbedingte Verwendung der Verteilerstücke erwiesen, da diese zum einen einen erhöhten Strömungswiderstand gegenüber dem strömenden Fluid und einen zur Ansatzbildung neigenden Leitungsbereich darstellen. Zum anderen sind derartige Verteilerstücke, insb. auch zur Reduzierung vorgenannter strömungsmechanischer Nachteile, aufwendig herzustellende Wandler-Komponenten, die einen erheblichen Anteil der Herstellungskosten derartiger Coriolis-Massedurchflußmesser verursachen.

Vorgenannte Nachteile sind bei einem Wandler-Typ, wie er z.B. in der US-A 52 75 061 oder der DE-A 43 27 052 gezeigt ist, weitgehend behoben.

So ist nämlich in der DE-A 43 27 052 ein elektromechanischer Wandler vom Coriotis-Typ beschrieben, Welcher Wandler auf einen Massedurchfluss eines in einer Rohrleitung strömenden Fluids reagiert und weicher Wandler umfaßt:

- ein symmetrisch gekrümmtes U-förmlges Meßrohr zum Führen des Fluids,
- wobei das Meßrohr einlaßseitig und auslaßseitig an Einspannpunkten eingespannt ist, sowie
- eine Erregeranordnung zum Erzeugen mechanischer Schwingungen des Meßrohrs in der Ebene des Meßrohrs in der Weise, daß das Meßrohr in der Ebene pendett.

In der US-A 52 75 061 wiederum ist ein elektromechanischer Wandler vom Coriolis-Typ beschrieben, der auf einen Massedurchfluß eines in einer Rohrleitung strömenden Fluids reagiert und der umfaßt:

- ein in einer Rohrebene und zu einer darin liegenden Symmetrieachse symmetrisch gekrümmtes Meßrohr zum Führen des Fluids,
- einen starren Trägerkörper zum Haltern des Meßrohrs,

     - - wobei das Meßrohr einlaßseitig und auslaßseitig am Trägerkörper fixiert ist,

- einen am Meßrohr fixierten, starren Schwingungsisolator zum Erzeugen eines starren und im Betrieb formstabilen gekrümmtes Meßrohr-Segments von vorgebbarer Raumform sowie
- eine Erregeranordnung, die das Meßrohr im Betrieb zu Schwingungen in einer in der Rohrebene symmetrischen Schwingungsform anregt, bei der die Raumform des Meßrohr-Segments stets erhalten bleibt.

Vom Fluid durchströmt, wird das in der beschriebenen Weise angeregte Meßrohr aufgrund von Corioliskräften ebenfalls in der Rohrebene anti-symmetrisch verformt. Die Schwingungen des Meßrohrs werden wiederum einlaßseitig und auslaßseitig sensorisch erfaßt und die so erzeugten phasenverschobenen Sensorsignale entsprechend weiterverarbeitet und ausgewertet.

Es hat sich jedoch gezeigt, daß einerseits von vorgenanntem Wandler zwar praktisch keine Torsionsschwingungen erzeugt und die die Corioliskräfte erzeugenden Schwingungen des einzigen Meßrohrs, die üblicherweise auch diejenigen mit den größten Amplituden sind, in einfacher Weise durch eine in der Rohrebene zwar veränderliche, jedoch stets symmetrisch verbleibende Rohrform im wesentlichen neutralisiert werden; andererseits können jedoch aufgrund der Deformationsbewegungen des Meßrohrs und der somit wirksamen Massenbeschleunigung in Richtung der Symmetrieachse und somit quer zur Rohrleitung wirkende Trägheitskräfte im Wandler erzeugt werden. Letztere können wiederum eine Ursache für unerwünschte Biegeschwingungen der angeschlossenen Rohrleitung sein.

Ferner stellt ein Schwingungsisolator der beschriebenen Art, der, wie in der US-A 52 75 061 weiter vorgeschlagen, auch als eine Umhüllung des Meßrohr-Segments ausgeführt sein kann, einerseits eine Auslegermasse dar, die, bei Pendel-Bewegungen des angeregten und vom Fluid durchströmten Meßrohrs beschleunigt, auf die Rohrleitung ebenfalls störend einwirken kann. Andererseits ist ein solcher Schwingungsisolator ein zusätzlich zu fertigendes und mittels entsprechender zusätzlicher Arbeitsschritte in den Wandler zu integrierendes Bauteil dar, das die Herstellung verteuert.

Ein Aufgabe der Erfindung besteht daher darin, einen für einen Coriolis-Massedurchflußaufnehmer geeigneten Wandler anzugeben, der einfach herzustellen ist, bei dem zur Herstellung des Meßrohrs auch Materialien mit einem hohen Elastizitäsmodul und/oder einem hohen Ausdehnungskoeffizienten, insb. Edelstahl, verwendet werden können und durch den im Betrieb praktisch keine oder nur sehr geringe Störschwingungen, insb. keine Torsionsschwingungen und/oder keine Biegeschwingungen, in der angeschlossenen Rohrleitung verursacht werden.

Zur Lösung der Aufgabe besteht die Erfindung in einem elektromechanischen Wandler vom Coriolis-Typ gemäß Anspruch 1.

Nach einer bevorzugten ersten Ausgestaltung der Erfindung ist das Meßrohr in der Rohrebene trapezförmig gekrümmt.

Nach einer bevorzugten zweiten Ausgestaltung der Erfindung erzeugt die Erregeranordnung eine das Meßrohr verformende Erregerkraft, die in Richtung der Symmetrieachse wirkt.

Nach einer bevorzugten dritten Ausgestaltung der Erfindung weist die erste Meßrohr-Eigenform wenigstens drei Schwingungsbäuche auf.

Nach einer bevorzugten vierten Ausgestaltung der Erfindung führt das Meßrohr Schwingungen in einem $f3$-Eigenmode aus.

Ein Grundgedanke der Erfindung besteht darin, zum Erzeugen von Corioliskräften im in der vorbeschriebenen Weise gekrümmten Meßrohr, dieses zu Schwingungen in der Rohrebene anzuregen, und zwar dynamisch so ausbalanciert, daß auch die in der Rohrebene in Richtung der Symmetrieachse wirkenden Trägheitskräfte kompensiert und somit im wesentlichen eleminiert werden.

Der erfindungsgemäße Wandler zeichnet sich vor allem dadurch aus, das er einerseits sehr kompakt und, insb. aufgrund der dynamischen Schwingungsentkopplung, sehr leicht ausgeführt werden kann und andererseits einfach zu fertigen ist.

Ein weiterer Vorteil der Erfindung besteht darin, daß sowohl auf zusätzliche Schwingungsisolatoren der beschriebenen Art als auch auf die parallel geschaltete Doppelrohranordnung und somit auf die aufwendig herzustellenden Verteilerstücke verzichtet werden kann.

Nachfolgend werden die Erfindung und weitere Vorteile anhand eines Ausführungsbeispiels erläutert, das in den Figuren der Zeichnung dargestellt ist. Gleich Teile sind in den Figuren mit gleichen Bezugszeichen versehen. Falls es der Übersichtlichkeit dienlich ist, wird auf bereits erwähnte Bezugszeichen in nachfolgenden Figuren verzichtet.

Fig. 1     zeigt teilweise geschnitten einen elektromechanischen Wandler vom Coriolis-Typ mit einem Meßrohr in einer Seitenansicht,

Fig. 2     zeigt teilweise geschnitten den Wandler gemäß Fig. 1 in einer Draufsicht,

Fig. 3     zeigt den Wandler gemäß Fig. 1 in einer Vorderansicht und

Fig. 4     zeigt schematisch Biegelinien des Meßrohrs von Fig. 1 während des Betriebs des Wandlers.

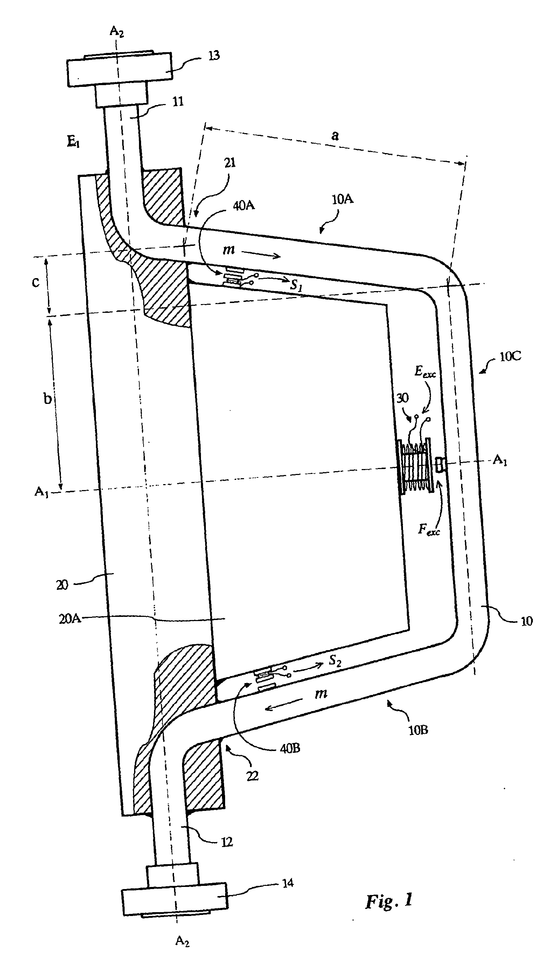

In den Fig. 1 ist ein auf einen Massedurchfluß $m$ eines in einer nicht dargestellten Rohrleitung strömenden Fluids reagierender, elektromechanischer Wandler vom Coriolis-Typ schematisch dargestellt. Der Wandler dient, insb. als Primär-Wandler in einem Coriolis-Massedurchflußmeßgerät verwendet, dazu, im strömenden Fluid Corioliskräfte zu erzeugen, die meßbar, insb. sensorisch erfaßbar, auf den Wandler einwirken.

Der Wandler umfaßt dazu ein, insb. einziges, gekrümmtes und im Betrieb oszillierendes Meßrohr 10 zum Führen des Fluids.

Das Meßrohr 10 ist, wie in der Fig. 1 dargestellt, an einem starren Trägerkörper 20 des Wandlers mittels einer einlaßseitigen ersten Einspannung 21 und mittels einer auslaßseitigen zweiten Einspannung 22 fixiert. Die beiden Einspannungen 21, 22 können in der dem Fachmann bekannten Weise, z.B. durch Schweißung oder Hartlötung, realisiert sein.

Als Trägerkörper 20 kann z.B. ein Profilstab, ein Tragrahmen oder auch eine Platte von geeignetem Querschnitt und Material dienen. Der Trägerkörper 20 sowohl einstückig als auch mehrteilig zusammengesetzt und aus den dem Fachmann für derartige Trägerkörper geläufigen Materialien, wie z.B. Baustahl, Edelstahl anderen geeigneten Metalllegierungen, gefertigt sein.

Das Meßrohr 10 ist, wie in der Fig. 1 dargestellt, symmetrisch zu einer in einer Rohrebene $E_1$ liegenden ersten Rohrachse $A_1$ gekrümmt, die nachfolgend zur Verdeutlichung als Symmetrieachse $A_1$ bezeichnet werden soll; die Rohrebene $E_1$ verläuft parallel zur Zeichenebene von Fig. 1.

Beim gezeigten Ausführungsbeispiel beschreibt die Projektion des Meßrohrs 10 auf die Rohrebene $E_1$ ein symmetrisches Trapez mit einem Grundlinienverhältnis von größer eins, bei dem die größere der beiden Trapez-Grundlinien parallel zu einer in der Rohrebene $E_1$ liegenden, senkrecht auf der Symmetrieachse $A_1$ stehenden zweiten Rohrachse $A_2$ ausgerichtet ist. Untersuchungen haben ferner ergeben, daß neben der vorbeschriebenen Trapezform, auch eine solche Trapezform geeignet ist, deren Grundlinienverhältnis kleiner eins ist. Ein derart gekrümmtes Meßrohr ist z.B. auch in der US-A 53 59 881 beschrieben.

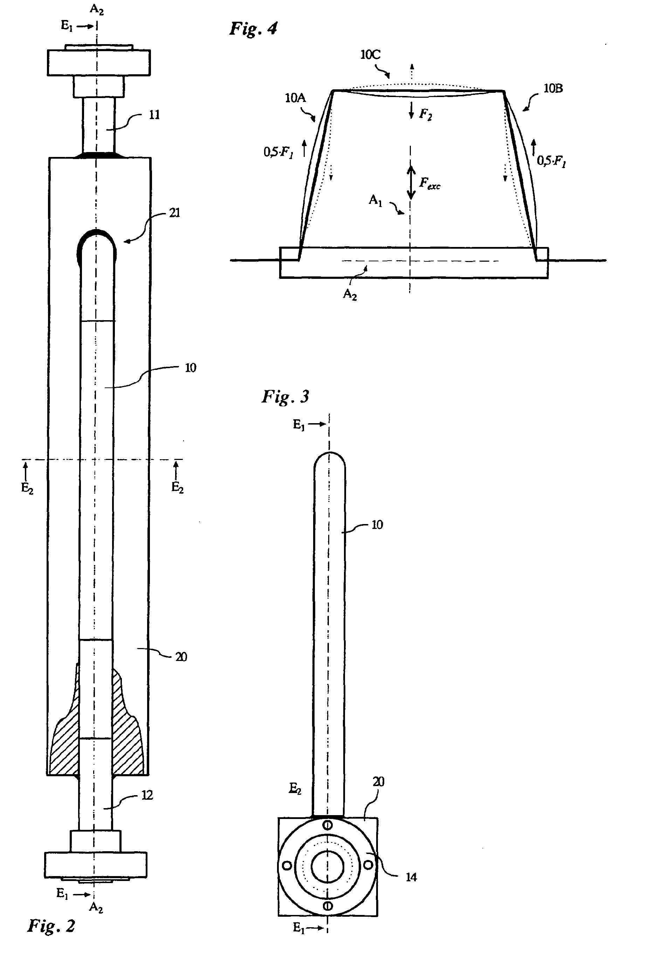

Gemäss der Erfindung, entspricht die Rohrebene $E_1$ einer Symmetrieebene des Meßrohrs 10, die dieses imaginär längs spaltet. Demgemäß stimmt die Symmetrieachse $A_1$, wie aus der Zusammenschau von Fig. 1 und 2 ohne weiteres ersichtlich, praktisch mit einer 1-dimensionalen Projektion auf die Rohrebene $E_1$ einer diese senkrecht schneidenden zweiten Symmetrieebene $E_2$ des Meßrohrs 10 überein.

Zum Einleiten des Fluids in das Meßrohr 10 ist der Wandler über einlaßseitig bzw. ein auslaßseitig in das Meßrohr 10 mündende Rohrstücke 11, 12 an die Rohrleitung angeschlossen. Beide Rohrstücke 11, 12 sind bevorzugt zueinander und zur Rohrachse $A_2$ fluchtend ausgerichtet. Wie in Fig. 1 schematisch dargestellt, können die Rohrstücke 11, 12 auf die gleiche Weise wie das Meßrohr 10 am Trägerkörper 20 fixiert, z.B. angeschweist, sein.

Für den Fall, daß der Wandler lösbaren mit der Rohrleitung zu montieren ist, ist jedem der beiden Rohrstücken 11, 12 bevorzugt ein Flansch 13 bzw. 14 angeformt; falls erforderlich können die beiden Rohrstücke 11, 12 aber auch direkt mit der Rohrleitung z.B. mittels Schweißung oder Hartlötung, verbunden werden.

Meßrohr 10 und Rohrstücke 11, 12 sind können in vorteilhafter Weise einstückig ausgeführt sein, zu deren Herstellung ein einziges rohrförmiges, entsprechend gebogenes Halbzeug dient; falls erforderlich können Meßrohr 10 und Rohrstücke 11, 12 aber auch mittels einzelner, nachträglich zusammengefügter, z.B. zusammengeschweißter, Halbzeuge hergestellt sein.

Im Betrieb des Wandlers wird das Meßrohr 10 zu mechanischen Schwingungen, insb. auf einer seiner Resonanzfrequenzen, so angeregt, daß es sich im wesentlichen gemäß einer natürlichen ersten Meßrohr-Eigenform auslenkt und somit zwangfrei, insb. vollständig, verformt. Die angeregte Meßrohr-Eigenform ist erfindungsgemäß so gewählt, daß sich praktisch das gesamte oszillierende Meßrohr 10 zwar verformt, seine oben beschriebene Symmetrie in der Rohrebene $E_1$ dabei jedoch im wesentlichen erhalten bleibt. Aufgrund dieser auch beim angeregten Meßrohr 10 erhaltengebliebenen Symmetrie heben sich die durch die Schwingungen in der ersten Meßrohr-Eigenform hervorgerufenen, in der Rohrebene $E_1$ senkrecht zur Symmetrieachse $A_1$ wirkenden Trägheitskräfte gegenseitig auf und werden somit in ihrer Wirkung nach außen, insb. auf die angeschlossene Rohrleitung, praktisch vollständig neutralisiert.

Nach einer bevorzugten Ausgestaltung der Erfindung, wird das Meßrohr 10 im Betrieb 10 mit einer Schwingungsfrequenz angeregt, die möglichst genau einer natürlichen Resonanzfrequenz des sogenannten *f3*-Eigenmodes des Meßrohrs 10 entspricht, also einem Eigenmode bei dem das oszillierende, jedoch nicht vom Fluid durchströmte Meßrohr 10 in der Rohrebene $E_1$, wie in Fig. 4 schematisch anhand von zeitlich versetzte Momentaufnahmen des Meßrohrs 10 repräsentierenden Biegelinien dargestellt, zeitweise drei Schwingungsbäuche aufweist.

Für den Fall, daß das Fluid in der Rohrleitung strömt und somit der Massedurchfluß *m* von Null verschieden ist, werden mittels des angeregten Meßrohr 10 im hindurchströmenden Fluid Corioliskräfte induziert. Diese wiederum wirken auf das Meßrohr 10 zurück und bewirken so eine zusätzliche, sensorisch erfaßbare Verformung des Meßrohrs 10 gemäß einer natürlichen zweiten Meßrohr-Eigenform, die, ebenfalls in der Rohrebene $E_1$ verlaufend, der ersten Meßrohr-Eigenform überlagert ist. Die momentane Ausprägung der Verformung des Meßrohrs 10, insb. hinsichtlich der Amplituden, ist dabei auch vom momentanen Massedurchfluß *m* abhängig. Als zweite Meßrohr-Eigenform kann beim erfindungsgemäßen Wandler z.B. die Eigenform des anti-symmetrischen *f2*-Eigenmodes, also jene Meßrohr-Eigenform mit zwei Schwingungsbäuchen und/oder die Meßrohr-Eigenform des anti-symmetrischen *f4*-Eigenmodes mit vier Schwingungsbäuchen dienen.

Bei einer Erregung des Meßrohrs 10 zu Schwingungen in der ersten Meßrohr-Eigenform können aufgrund dessen, daß in der Rohrebene $E_1$ neben der durch die Symmetrieachse $A_1$ beschriebenen keine andere Symmetrie existiert, solche Trägheitskräfte erzeugt werden, die, wie bereits erwähnt, laterale Auslenkungen des Wandlers in Richtung der Symmetrieachse $A_1$ und somit Schwingungen der Rohrleitung, insb. Biegeschwingungen, bewirken.

Es hat sich jedoch überraschender Weise gezeigt, daß diese in Richtung der Symmetrieachse $A_1$ wirkenden Trägheitskräfte durch eine geeignete Dimensionierung des Meßrohrs 10 zumindest in einem Arbeitsbereich des Wandlers dynamisch zumindest soweit kompensiert werden können, daß keine signifikanten Störungen auf die Rohrleitung übertragen werden. Anders gesagt, die oben beschriebenen, nach außen gerichteten Kraftwirkungen des Wandlers sind für diesen Fall, trotz einer in der Rohrebene $E_1$ bezüglich der Rohrachse $A_2$ oder dazu parallel verlaufenden anderen Rohrachsen stets vorhandenen geometrischen Unsymmetrie, neutralsiert.

So wird z.B. bei einer Erregung des *f3*-Eigenmodes, wie in der Fig. 4 dargestellt, einerseits eine erste Trägheitskraftkomponente $F_1$ in Richtung der Symmetrieachse $A_1$ aufgrund einer anti-symmetrischen Verformung zweier Schenkelsegmente des Meßrohrs 10, nämlich einem einlaßseitigen ersten Schenkelsegment 10A und einem auslaßseitigen zweiten Schenkelsegment 10B, erzeugt. Andererseits wirkt im angeregten Meßrohr 10 in einer Phasenopposition zur Trägheitskraftkomponente $F_1$ eine zweite Trägheitskraftkomponente $F_2$, die durch eine Verformung eines Scheitelsegments 10C des Meßrohrs 10 hervorgerufen wird.

Untersuchungen verschiedener Meßrohrformen haben ergeben, daß zur Minimierung oder vollständigen Neutralisierung der vom Meßrohr 10 ausgehenden Störungen eine geeignete Dimensionierungsvorschrift anhand einiger weniger geometrischer Parameter des Meßrohrs 10 formuliert werden kann, nämlich einer mittleren Schenkelsegment-Länge a, einer Scheitelsegment-Länge 2b, wobei a+b einer halben Gesamtlänge des Meßrohrs 10 entspricht, sowie einer senkrechten Projektion c der Schenkelsegment-Länge a auf die Rohrachse $A_2$, vgl. Fig. 1.

Für das in der Rohrebene $E_1$ trapezförmig gekrümmte Meßrohr 10 mit einem Grundlinienverhältnis größer eins kann die Dimensionierungsvorschrift wie folgt formuliert werden:

$$\frac{c}{a+b} = 0,0023 \cdot \exp\left(17,33 \cdot \frac{b}{a+b}\right) \qquad (1)$$

Ferner konnte für das trapezförmig gekrümmte Meßrohr 10 bei einem Grundlinienverhältnis kleiner eins folgende Formulierung für die Dimensionierungsvorschrift empirisch ermittelt werden:

$$\frac{c}{a+b} = -37,5 \cdot \left(\frac{b}{a+b}\right)^2 + 30,45 \cdot \frac{b}{a+b} - 6,3 \qquad (2)$$

Wie aus den Formeln (1) und (2) ersichtlich, ist eine für die Eliminierung der Trägheitskräfte geeignete Dimensionierungsvorschrift weder von Massen einzelner Wandlerkomponenten, insb. auch nicht denen des Meßrohrs 10 oder des Trägerkörpers 20, noch von anderen Parametern, wie z.B. Federsteifigkeiten oder Eigenfrequenzen, abhängig. Dementsprechend kann der Wandler z.B. auch sehr leicht ausgeführt werden, da praktisch keine trägen Massen zur Schwingungsentkopplung der angeschlossenen Rohrleitung erforderlich sind. Des weiteren ist erkennbar, daß beide Formeln (1), (2) von mehreren Parametern abhängig und somit unterbestimmt sind, was wiederum eine Vielzahl optimierter, also dynamisch gut ausbalancierter Varianten für die Bemessung des Wandlers eröffnet.

Aufgrund der Überlagerung der bei strömendem Fluid im Betrieb gleichzeitig wirkenden Schwingungen des Meßrohrs 10 gemäß der ersten und zweiten Eigenform wird letzteres bezüglich der Symmetrieachse $A_1$ gerinfügig unsymmetrisch verformt und führt somit in der Rohrebene $E_1$ verlaufende, relativ schwache Pendel-Bewegungen aus. Die daraus resultierenden Momente und entlang der Rohrachse $A_2$ wirkenden Trägheitskräfte sind einerseits sehr gering und können andererseits aufgrund der starren, mechanisch nieder-und mittelfrequent filternden, Ankopplung an die Rohrleitung ohne weiteres von dieser fern gehalten werden. Falls erforderlich können hierzu auch entsprechende Schwingungstilger zusätzlich am Wandler, z.B. am Trägerkörper 20, angebracht werden.

Zum Erzeugen mechanischer Schwingungen des Meßrohrs 10 umfaßt der Wandler des weiteren eine, insb. elektrodynamische, Erregeranordnung 30. Diese dient dazu, eine, insb. von einer nichtdargestellten Steuer-Elektronik des oben genannten Coriolis-Massedurchflußmessers eingespeiste, elektrische Erregerenergie $E_{exc}$, z.B. mit einem geregelten Strom und/oder einer geregelten Spannung, in eine auf das Meßrohr 10, z.B. pulsförmig oder harmonisch, einwirkende und dieses in der vorbeschriebenen Weise elastisch verformende Erregerkraft $F_{exc}$ umzuwandeln. Die Erregerkraft $F_{exc}$ kann hierbei, wie in Fig. 4 schematisch dargestellt, bidirektional oder unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden.

Nach einer bevorzugten Ausgestaltung der Erfindung ist die Erregeranordnung 30 ebenfalls am Trägerkörper 20, z.B. mittels eines zugsteifen Halteblechs 20A, fixiert und, wie in Fig. 1 schematisch dargestellt, mittels einer um einen Spulenkern gewickelten Magnetspule realisiert, die, von einem Spulenstrom durchflossen, die Erregerkraft $F_{exc}$ zwischen dem Spulenkern und einem am Meßrohr 10 starr befestigten, vom Spulenkern durch einen Luftspalt getrennten magnetischen Anker erzeugt. Spulenkern und Anker sind dabei so zu einander angeordnet und ausgerichtet, daß die erzeugte Erregerkraft $F_{exc}$ mit der Symmetrieachse $A_1$ fluchtend auf das Meßrohr 10 wirkt, vgl. Fig. 4. Die Erregeranordnung 30 kann aber auch, insb. für eine Erregung im $f3$-Eigenmode, so zum Meßrohr 10 angeordnet sein, daß die Erregerkraft $F_{exc}$ in der Rohrebene $E_1$ wirkend, senkrecht zur Symmetrieachse $A_1$ gerichtet ist und dabei z.B. genau an den Maxima der beiden einander gegenüberliegenden Schwingungsbäuchen gleichzeitig zur Wirkung gelangt, vgl. hierzu auch die US-A 52 75 061.

Anstelle einer elektrodynamischen Erregeranordnung, bei der an Grenzflächen in einem Magnetkreis mechanische Kraftwirkungen erzeugt werden, können auch andere, dem Fachmann bekannte Erregeranordnungen zum Erzeugen der mechanischen Schwingungen des Meßrohrs 10 verwendet werden, wie z.B. solche, die mittels piezoelektrischen Keramiken elektrische Spannungen in eine mechanische Kraftwirkung wandeln.

Zum Detektieren von Schwingungen des Meßrohr 10 kann z.B. eine für Coriolis-Massedurchflußmesser übliche Sensoranordnung verwendet werden, bei der in der dem Fachmann bekannten Weise, wie in Fig. 1 schematisch dargestellt, mittels eines einlaßßseitigen ersten Sensors 40A und mittels eines auslaßseitigen zweiten Sensors 40B die Bewegungen des Meßrohrs 10 in der Rohrebene $E_1$ erfaßt und in ein entsprechendes erstes bzw. zweites Sensorsignal $S_1$, $S_2$ umgewandelt werden. Als Sensoren 40A, 40B können z.B., wie in Fig. 1 schematisch dargestellt, die Schwingungen relativ messende, elektrodynamische Geschwindigkeitssensoren oder aber elektrodynamische Wegsensoren oder Beschleunigungssensoren verwendet werden. Anstelle elektrodynamischer Sensoranordnungen können ferner auch mittels resistiver oder piezo-elektrischer Dehnungsmeßstreifen messende oder opto-elektronische Sensoranordnungen zum Detektieren der Schwingungen des Meßrohrs 10 dienen.

**Patentansprüche**

1. Elektromechanischer Wandler vom Coriolis-Typ, welcher Wandler auf einen Massedurchfluss eines in einer Rohrleitung strömenden Fluids reagiert und welcher Wandler umfaßt:

   - ein zu einer in einer Rohrebene ($E_1$) liegenden Symmetrieachse ($A_1$) symmetrisch gekrümmtes Meßrohr (10) zum Führen des Fluids, wobei die Rohrebene ($E_1$) einer Symmetrieebene des Meßrohrs (10) entspricht, die dieses imaginär längs spaltet
   - einen starren Trägerkörper (20) zum Haltern des Meßrohrs (10), wobei das Meßrohr (10) einlaßseitig und auslaßseitig am Trägerkörper (20) fixiert ist, sowie
   - eine Erregeranordnung (30) zum Erzeugen mechanischer Schwingungen des Meßrohrs,

   **dadurch gekennzeichnet, daß** die Erregeranordnung (30) das Meßrohr (10) im Betrieb zu Schwingungen in einer in der Rohrebene ($E_1$) symmetrischen ersten Meßrohr-Eigenform anregt, die wenigstens drei Schwingungsbauche aufweist.

2. Elektromechanischer Wandler nach Anspruch 1, wobei die Erregeranordnung (30) eine das Meßrohr (10) verformende Erregerkraft $F_{exe}$, erzeugt, die in Richtung der Symmetrieachse ($A_1$) wirkt.

3. Elektromechanischer Wandler nach einem der vorherigen Ansprüche, wobei das Meßrohr (10) Schwingungen in einem *f3*-Eigenmode ausführt.

4. Elektromechanischer Wandler nach dem vorherigen Anspruch, wobei das Meßrohr mit einer Schwingungsfrequenz angeregt ist, die einer natürlichen Resonanzfrequenz des f3-Eigenmodes entspricht

5. Elektromechanischer Wandler nach einem der vorherigen Ansprüche, wobei das Meßrohr (10) in der Rohrebene ($E_1$) trapezförmig gekrümmt ist.

6. Elektromechanischer Wandler nach dem vorherigen Anspruch, wobei das Meßrohr (10) ein einlaßseitiges erstes Schenkelsegment (10A) mit einer mittleren Schenkelsegment-Länge, a, ein auslaßseitiges zweites Schenkelsegment (10B) sowie ein Scheitelsegment (10C) mit einer Scheitelsegment-Länge, 2b, aufweist.

7. Elektromechanischer Wandler nach Anspruch 6, wobei das Meßrohr (10) so dimensioniert ist, daß gift

$$\frac{c}{a+b} = 0{,}0023 \cdot \exp\left(17{,}33 \cdot \frac{b}{a+b}\right),$$

worin c einer senkrechten Projektion der Schenkelsegment-Länge, a, auf eine in der Rohrebene ($E_1$) liegende, senkrecht zur Symmetrieachse ($A_1$) verlaufende Rohrachse ($A_2$) entspricht.

8. Elektromechanischer Wandler nach Anspruch 6, wobei das Meßrohr (10) so dimensioniert ist, daß gilt:

$$\frac{c}{a+b} = -37,5 \cdot \left(\frac{b}{a+b}\right)^2 + 30,45 \cdot \frac{b}{a+b} - 6,3 \, ,$$

worin c einer senkrechten Projektion der Schenkelsegment-Länge, a, auf eine in der Rohrebene ($E_1$) liegende, senkrecht zur Symmetrieachse ($A_1$) verlaufende Rohrachse ($A_2$) entspricht.

9.  Verwendung eines elektromechanischen Wandlers nach einem der vorherigen Ansprüche in einem Coriolis-Massedurchflußmesser.

**Claims**

1.  Coriolis-type electromechanical converter, said converter reacting to a mass flow of a fluid flowing through a pipe and comprising:

    - a measuring tube (10) for conveying fluid which is symmetrically bent vis-à-vis an axis of symmetry ($A_1$) located in a pipe plane ($E_1$), wherein the pipe plane ($E_1$) corresponds to a plane of symmetry of the measuring tube (10) which creates an imaginary longitudinal split in the measuring tube (10)
    - a rigid carrier body (20) designed to hold the measuring tube (10), wherein the measuring tube (10) is fixed on the carrier body (20) on the inlet and outlet side, and
    - an exciter arrangement (30) to generate mechanical vibrations of the measuring tube,

    **characterized in that** the exciter arrangement (30) causes the measuring tube (10) to vibrate during operation in a symmetrical first measuring tube natural mode in the pipe plane ($E_1$), said mode having at least three anti-nodes.

2.  Electromechanical converter as claimed in Claim 1, wherein the exciter arrangement (30) generates an exciter force ($F_{exc}$) which deforms the measuring tube (10) and acts in the direction of the axis of symmetry ($A_1$).

3.  Electromechanical converter as claimed in one of the previous claims, wherein the measuring tube (10) effects vibrations in an f3 natural mode.

4.  Electromechanical converter as claimed in the previous claim, wherein the measuring tube is caused to vibrate at a vibration frequency which corresponds to a natural resonance frequency of the f3 natural mode.

5.  Electromechanical converter as claimed in one of the previous claims, wherein the measuring tube (10) is bent in a trapezoidal manner in the pipe plane ($E_1$),

6.  Electromechanical converter as claimed in the previous claim, wherein the measuring tube (10) has a first leg segment (10A) on the inlet side with an average leg segment length, a, a second leg segment (10B) on the outlet side and a vertical segment (10C) with a vertical segment length, 2b.

7.  Electromechanical converter as claimed in Claim 6, wherein the dimensions of the measuring tube (10) are such that the following applies:

$$\frac{c}{a+b} = 0,0023 \cdot \exp\left(17,33 \cdot \frac{b}{a+b}\right)$$

where c corresponds to a vertical projection of the leg segment length, a, to a pipe axis ($A_2$) which is located on the pipe plane ($E_1$) and is vertical to the axis of symmetry (A1).

8.  Electromechanical converter as claimed in Claim 6, wherein the dimensions of the measuring tube (10) are such that the following applies:

$$\frac{c}{a+b} = -37,5 \cdot \left(\frac{b}{a+b}\right)^2 + 30,45 \cdot \frac{b}{a+b} - 6,3$$

where c corresponds to a vertical projection of the leg segment length, a, to a pipe axis ($A_2$) which is located on the pipe plane ($E_1$) and is vertical to the axis of symmetry (A1).

9. Use of an electromechanical converter as claimed in one of the previous claims in a Coriolis mass flowmeter.

**Revendications**

1. Convertisseur électromécanique du type Coriolis, lequel convertisseur réagit au débit massique d'un fluide circulant dans une conduite, et lequel convertisseur comprenant:

   - un tube de mesure (10) pourvu de coudes symétriques par rapport à un axe de symétrie ($A_1$) se trouvant dans le plan de tube ($E_1$), destiné à acheminer le fluide, le plan de tube ($E_1$) correspondant à un plan de symétrie du tube de mesure (10), qui divise de façon imaginaire ce dernier dans l'axe longitudinal,
   - un corps-support rigide (20) destiné au maintien du tube de mesure (10), le tube de mesure (10) étant fixé côté entrée et côté sortie sur le corps-support (20), ainsi que
   - un circuit d'excitation (30) destiné à la génération de vibrations mécaniques du tube de mesure,

   **caractérisé en ce que** le circuit d'excitation (30) excite, en fonctionnement, le tube de mesure (10) en vibrations dans le plan de tube ($E_1$), selon une première forme intrinsèque symétrique du tube de mesure, qui présente au minimum trois ventres de vibration.

2. Convertisseur mécanique selon la revendication 1, pour lequel le circuit d'excitation (30) génère une force d'excitation $F_{exc.}$ déformant le tube de mesure (10), qui agit en direction de l'axe de symétrie ($A_1$).

3. Convertisseur mécanique selon l'une des revendications précédentes, pour lequel le tube de mesure (10) exécute des vibrations dans un mode intrinsèque f3.

4. Convertisseur mécanique selon la revendication précédente, pour lequel le tube de mesure est excité à une fréquence de vibrations, qui correspond à une fréquence de résonance naturelle du mode intrinsèque f3.

5. Convertisseur mécanique selon l'une des revendications précédentes, pour lequel le tube de mesure (10) est coudé dans le plan de tube ($E_1$) selon une forme trapézoïdale.

6. Convertisseur mécanique selon la revendication précédente, pour lequel le tube de mesure (10) présente côté entrée un premier segment de branche (10A) d'une longueur moyenne de segment de branche 'a', côté sortie un deuxième segment de branche (10B), ainsi qu'un segment vertical (10C) d'une longueur de segment vertical '2b'.

7. Convertisseur mécanique selon la revendication 6, pour lequel le tube de mesure est dimensionné d'après la formule suivante :

$$\frac{c}{a+b} = 0,0023 \cdot \exp\left(17,33 \cdot \frac{b}{a+b}\right)$$

où c correspond à une projection verticale de la longueur de segment de branche 'a', sur un axe de tube ($A_2$) situé dans le plan de tube ($E_1$), perpendiculaire à l'axe de symétrie ($A_1$).

8. Convertisseur mécanique selon la revendication 6, pour lequel le tube de mesure est dimensionné d'après la formule suivante :

$$\frac{c}{a+b} = -37,5 \cdot \left(\frac{b}{a+b}\right)^2 + 30,45 \cdot \frac{b}{a+b} - 6,3$$

où c correspond à une projection verticale de la longueur de segment de branche 'a', sur un axe de tube $(A_2)$ situé dans le plan de tube $(E_1)$, perpendiculaire à l'axe de symétrie $(A_1)$.

9. Utilisation d'un convertisseur électromécanique selon l'une des revendications précédentes dans un débitmètre Coriolis.

*Fig. 1*

*Fig. 4*

$F_2$

$10C$

$10A$

$10B$

$0{,}5{\cdot}F_1$

$0{,}5{\cdot}F_1$

$F_{exc}$

$A_1$

$A_2$

*Fig. 3*

$E_1 \rightarrow$

10

$E_2$

20

14

$E_1 \rightarrow$

$A_2$

$E_1 \rightarrow$

11

21

10

$E_2$

$E_2$

20

12

$E_1 \rightarrow$

$A_2$

*Fig. 2*

12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US RE31450 E
- US 4491025 A
- US 4768385 A

- US 5359881 A
- US 5275061 A
- DE 4327052 A